# EUROPEAN PATENT SPECIFICATION

(11) **EP 0 344 089 B1**
(45) Date of publication and mention of the grant of the patent: **22.09.1993**
(21) Application number: 89630097.7
(22) Date of filing: 26.05.1989
(51) Int. Cl.: H01M 8/02

(54) **Process for forming a fuel cell matrix**
Verfahren zur Herstellung einer Brennstoffzellen-Matrix
Procédé pour la fabrication d'une matrice destinée aux éléments à combustible

(30) Priority: 27.05.1988 US 199657
(43) Date of publication of application: 29.11.1989
(73) Proprietor: INTERNATIONAL FUEL CELLS CORPORATION, South Windsor, Connecticut 06074 (US)
(72) Inventor: Spearin, Walter E., Appleton Wisconsin 54911 (US)
(74) Representative: Perani, Aurelio

(56) References cited:
- DE-A- 2 552 610
- US-A- 4 000 006
- US-A- 4 001 042
- US-A- 4 017 664
- US-A- 4 479 432

## Description

This invention relates to fuel cells and more particularly to electrolyte retaining matrices and methods for making the same.

Fuel cells for the production of electrical energy from a fuel and oxidant are well known in the art. Such cells in their most simplified design, comprise a housing, an oxidizing electrode spaced apart from a fuel electrode, and an electrolyte disposed between and in contact with said electrodes. The electrolyte can be a solid, a molten paste, a free-flowing liquid, or a liquid trapped in a matrix. This invention is concerned with the latter type of matrix which is preferred for many applications.

For optimum performance in a fuel cell employing a trapped aqueous electrolyte, the matrix must exhibit certain properties. For example, the matrix must be hydrophilic. Also, it must be continuous to prevent gas crossover or mixing of reactant gases in the fuel cell; in other words, it should be entirely free from pinholes and cracks.

It should be as thin as possible in order that the internal resistance losses through the electrolyte will be minimal. Intimate contact between matrix and electrode surface is necessary to maximize catalyst utilization. Uniform thickness is also critical to good performance in that lack of uniformity can cause current maldistributions with a loss in performance. It is also desirable that the pore size distribution of the matrix be very well controlled so as to prevent gas crossover and to insure proper electrolyte distribution throughout the cell.

Compounding the problems of achieving the foregoing properties is the fact that the electrode surface is hydrophobic and one is limited in the choice of materials which can be used. For example, the materials must be chemically and thermally stable at cell operating temperatures; also, they must not poison the catalyst and they must have a high electronic resistance. Finally, the matrix should be made by an economical process.

A common prior art economical method for making matrices has been by papermaking techniques, wherein the matrix is formed into a sheet and sandwiched between the electrodes in a fuel cell or fuel cell stack by mechanical means. For example, Landi US-A-3 407 249 forms sheets of fibrillated polytetrafluoroethylene. Mesite et al US-A-3 627 859 forms a matrix sheet from cellulosic fibers in combination with a fluorocarbon polymer. Emanuelson et al US-A-3 694 310 forms mats of matrix material from phenolic resin fibers coated with a phenolic beater addition resin.

Regardless of the material from which the mat is made, the mechanical sandwiching of a sheet type matrix between electrodes is deficient in that it does not necessarily result in intimate contact between the matrix and the electrode over the entire surface of the matrix. A further problem with making matrices by papermaking techniques is that the desired thinness cannot be achieved without losing the property which prevents gas crossover. Even if the matrix sheet could be made as thin as desirable, it would be extremely difficult, if not impossible, to handle.

Another method for forming a matrix, which overcomes some of the problems with the papermaking techniques, is to form the matrix directly on the surface of the electrode such as by dipping the electrode into an aqueous solution of the matrix material as described in Blanc et al US-Pat-A 3 022 244. This has also been accomplished by spraying or painting the matrix onto the surface of the electrode.

While these techniques overcome some of the handling problems associated with separate matrix sheets, it is difficult to maintain a uniform thickness. Because of the non-uniformity of the thickness it may be necessary that some areas be thicker than desirable in order to assure that there are no bare spots in the thinnest areas.

Commonly owned US-A-4 000 006 and US-A-4 001 042 teach the use of screen printing for applying an electrolyte matrix to the surface of an electrode. Although screen printing overcomes virtually all of the problems discussed above with regard to other methods for making matrices, the speed of the process would probably be limited to the equivalent of about 30.5 m of electrode length per minute for a fully automated operation. This is quite fast compared to other prior art methods, but it would be very desirable to be able to produce matrices at a considerably faster rate of speed. Also, despite their improvement over the prior art, it has been observed that matrices applied by the screen printing process show a pattern of "hills and valleys" which result from the imprint of the screen on the surface of the layer. If a similar quality matrix layer could be applied by a method which did not produce these "hills and valleys" (i.e. an even more uniform matrix layer) further advantages would be realized.

Commonly owned US-A-4 173 662, which teaches the use of "curtain coating" for applying an electrolyte matrix to an electrode surface, provides a fast and economical method for laying down a matrix based on the matrix particle sizes used in coating formulas described in the prior art. The curtain coating technique is simple in principle and was developed to minimize or eliminate process difficulties and/or enhance product properties associated with prior art. Specifically, the curtain coating technique for the forming of a fuel cell matrix was designed to be an economical and high speed method for applying a fuel cell electrolyte matrix to the surface of an electrode, the matrix being uniform and relatively thin and having all the characteristics and properties necessary for good performance in a fuel cell.

Accordingly the curtain coating invention embodied in US-A-4 173 662 is a process for forming a fuel cell electrolyte matrix on the surface of an electrode by passing the electrode through a continuous curtain of matrix material carried in a liquid vehicle and heat treating the coated electrode to remove the liquid vehicle thereby leaving a layer of matrix material on the electrode surface. This process has produced entirely satisfactory matrix layers on electrodes for use in contemporary fuel cell technology.

Advances in fuel cell technology for economy of construction and operation, however, dictate thinner matrix layers for electrolyte trapping at the electrode surface. State of the art now limits electrode matrix layers to a minimum average thickness of about 0.064 mm utilizing the prior art coating technologies to provide the matrix layer integrity necessary for good performance. Thinner layers of matrix applied by prior art have exhibited discontinuities and lack of uniformity that cause gas channeling and current maldistributions with a loss in fuel cell performance.

A complicating factor in reducing matrix layer thickness is the prerequisite that small size matrix particles must be used to insure proper electrolyte distribution through the cell and to prevent gas channeling. The prior art has been limited to the use of matrix particles sizes of not less than about 5 µm and preferably not more than 10 µm to maintain suitable porosity and electrolyte distribution for matrix layer thicknesses in the range of about 0.05 to 0.25 mm.

A second prerequisite to the successful use of thinner electrode matrix layers is the maintenance of layer uniformity, thereby minimizing fuel cell current maldistributions and resultant loss of performance. Prior coating or matrix forming arts have shown variations in matrix thickness as follows (TABLE I):

**TABLE I**

| MATRIX FORMING PROCESS | MIN.AVE. MATRIX THICKNESS (mm) | MIN.VARIATION IN THICKNESS (mm) | VARIATION % OF AVE. | U.S. PAT DOCUMENT REFS. |
|---|---|---|---|---|
| PAPERMAKING TECHNIQUES | about 0.20 | about 0.05 | 25 | 4 001 042 1/1977 Trocciola |
| SPRAYING OR PAINTING | about 0.127 | about 0.05 | 40 | 4 001 042 1/1977 Trocciola |
| SCREEN PRINTING | about 0.05 | about 0.02 | 50 | 4 001 041 1/1977 Trocciola |
| CURTAIN COATING | about 0.05 | about 0.005 | 80 | 4 173 662 11/1979 Stewart |

To insure proper electrolyte distribution throughout the fuel cell and to minimize gas channeling and current maldistributions, variations in matrix layer thickness should not exceed 20% of the average thickness. Accordingly, matrix thicknesses of less than 0.25 mm are not acceptable when using papermaking and spraying or painting techniques, or of less than 0.127 mm when using screen printing. In view of the matrix thickness variations inherent to the matrix forming processes described in the prior art, the only process of the prior art that could practically produce an acceptable matrix thickness of less than 0.05 mm is curtain coating technology.

Matrix particle sizes of about 1 µm are required for matrix layer thicknesses significantly less than 0.05 mm to provide the packing density necessary for suitable porosity, to prevent gas channeling, and for optimum electrolyte distribution throughout the fuel cell. These smaller matrix particles of about 1 µm in size, when substituted for the larger matrix particles in the water-based coating fluid described in detail in commonly owned US-A-4 173 662 cause foam development and foam stability when the fluid is transported to the curtain coater and on to the surface of the electrode substrate. Such a condition cannot be tolerated, as the air bubbles produced in the matrix layer can form pinholes or other discontinuities in the dried and sintered matrix layer.

In view of these limitations of prior art, if a matrix layer of less than 0.05 mm thickness but retaining all necessary fuel cell electrode performance qualities could be applied, further economic and performance advantages would be realized.

A widely-used technique for applying thin layers of water-based or organic solvent-based fluids, both pigmented and unpigmented, on various webs, films and substrates is encompassed in intaglio application technology. For example, the intaglio technique is used in one of the three principal printing processes of the graphic arts industry: gravure roll printing (direct and indirect), the other two main printing processes being letterpress (direct and flexographic) and offset. The gravure roll transfer process is also used in the paper coating and film coating industries for the application of functional and graphic arts coatings. In all cases, the gravure roll process consists essentially of the transfer of a liquid material from discrete depressions or cells etched or engraved in the surface of a metal roll to the surface of the substrate by contact. The surface of the substrate accordingly must be in a condition to receive and hold the liquid contained in the depressions or cells of the gravure roll surface and such condition includes, among other characteristics, suitable planarity (smoothness) and wetability by the liquid for reliable and positive transfer of the liquid during contact. Further, the transfer liquid must have the proper viscosity and flow characteristics for suitable retention by and release from the gravure roll surface conditions or cells during the period of contact.

A desirable characteristic of the intaglio (gravure) process is the transfer of precise and measured amounts of liquids to a substrate surface under suitable conditions, including the specific parameters of transfer speed, gravure roll cell size and shape, liquid viscosity and stability, and planarity and wetability of the substrate surface. For example, transfer speeds in the gravure roll process for water-based pigmented coatings with a viscosity of about 500 centipoises can exceed 305 m per minute of lateral substrate surface speed, representing an improvement in the economic speed in the forming of fuel cell electrolyte matrix layers.

Various engraved or etched patterns may be used for the gravure transfer process. Such patterns may take the form of a conical, pyramidal, quadrangular, or hexangular shape. Typical patterns can range from about 10 to 80 lines of cells per cm and the recess depth can vary from about 0.005 to 0.305 mm. The recessed areas may also be in the form of a helical groove with a typical thread pitch of from about 10 to 80 lines per cm. The gravure pattern may also be in the form of a matte finish produced by sandblasting the roll surface.

Despite the extensive use of intaglio (gravure) coating for the application of printing inks and functional coatings to a variety of substrates, there is no teaching or suggestion that a fuel cell matrix with all its attendant high technology properties and characteristics can be satisfactorily formed on a hydrophobic surface by the intaglio (gravure) process.

According to the invention there is now proposed a process for making a fuel cell electrode/matrix element, characterized by the steps of
intaglio gravure printing a uniform, continuous hydrophilic matrix layer having a thickness tolerance of less than 20%, designed to trap a liquid under normal fuel cell operating conditions, onto the surface of a hydrophobic fuel cell gas diffusion electrode, said electrode including a catalyst layer onto which the matrix layer is printed, said step of printing including applying an ink comprised of between 15 and 60%, by weight, of fuel cell electrolyte matrix material carried in a balance of liquid vehicle, the composite ink having a viscosity between 20 and 500 centipoises, placing said electrode with the catalyst layer to be coated facing upwardly, and printing or depositing said ink on the surface of said electrode in a layer not exceeding 0.05 mm, by an etched or engraved gravure roll having 8 to 18 cells per cm axially and circumferentially at the surface of said gravure roll; and
heat treating the matrix layer so formed to remove the liquid vehicle leaving a layer of matrix material on the electrode surface.

This process achieves the advantage that very thin uniform matrix layers not exceeding 0.05 mm in thickness without any cracks or pinholes can be formed which was not possible by the prior art processes.

Preferably the gravure roll used for the process comprises an etched or engraved pattern of quad pyramidal cells.

In one preferred embodiment said matrix material comprises, by weight, at least 90% silicon carbide of an average size not exceeding µm and up to 10% binder.

Preferably the binder used is polytetrafluoroethylene, the liquid vehicle comprises water as a liquid carrier and polyethylene oxide as a thickener.

Accordingly, the present invention is a process for forming a fuel cell electrolyte matrix on the surface of an electrode by imprinting on the electrode surface by gravure roll transfer a precise and metered amount of a matrix material carried in a liquid vehicle, and heat treating the coated electrode to remove the liquid vehicle thereby leaving a uniform layer of matrix material on the electrode surface.

More particularly, the transfer fluid comprises a smooth blend of particulate matrix material in a liquid vehicle. An excess of the transfer fluid is applied to the gravure roll surface followed by doctoring to leave a precise and measured amount of the transfer fluid in the depressions or cells of the gravure roll surface. The gravure roll surface is then brought into intimate and controlled contact with the surface of the electrode, with both the gravure roll surface and the electrode surface being moved at the same and constant lateral speed so no speed differential occurs at and during contact of the two surfaces. Intimate contact during fluid transfer is maintained by applying a measured and controlled force on the electrode against the gravure roll surface at the point of contact by the use of a pressure roll with a resilient-cover surface in contact with the electrode on the side exactly opposite to the point of contact with the gravure-roll surface. It is expected that such an arrangement as described in this invention can form finished matrices as fast as with the curtain coating process of prior art but in much thinner layers than in prior art.

As with gravure roll coating technology practiced in the prior art, the thickness of the fluid transferred depends upon the size and shape of the depressions or cells in the gravure roll surface, the smoothness and fluid receptivity of the substrate surface at the time of transfer, and the viscosity, flowability and solids content of the transfer fluid. In any event, it is important that all variables of the process be carefully controlled to maintain a substantially constant fluid mass transfer in order to obtain a uniformly thin coating on the electrode.

Because the matrix material of a fuel cell electrode is totally different from the coatings known to have been applied in the past gravure roll coating or printing, and because of the different and more stringent requirements of the fuel cell matrix as compared to, for example, printing papers or protective films, it could not initially be determined and it certainly was not obvious that the gravure roll process could be used. One concern was that the transfer pattern of the gravure roll would be imaged in the matrix layer formed on the electrode, thereby producing an uneven and possibly a discontinuous matrix layer.

Another concern was the potential for film splitting of the transfer fluid at the time of contact of the gravure roll and substrate surfaces, thereby producing a reticulated and unsatisfactory matrix layer. Neither the transfer nor the film-split pattern are of concern in some applications of the prior art of gravure roll coatings; in fact, the cellular pattern is a necessary feature in some graphic arts printing applications of gravure roll technoloy.

### EXAMPLE

The process of the present invention was investigated using a 7cm wide Pamarco Proofer gravure coater purchased from Pamarco, Inc., Roselle, New Jersey. Three different gravure rolls were tried in quad cell design having 10, 14 and 20 cells per cm of roll surface. The electrode sheet to be coated was placed horizontally on a level plate glass surface with the catalyst layer of the electrode uppermost. The wiper blade tension of the coater was set so the gravure roll would easily turn and not slide along the surface being coated. The coater wiper blade was held at about a 60° angle from horizontal so the coating fluid could be poured into the blade nip while moving the coater across the upper surface of the electrode. Using the Pamarco Proofer described in the foregoing, silicon carbide matrix layers were applied over the platinum catalyzed surface of a gas diffusion electrode in thickness and under conditions to be later described. Silicon carbide is a known electrolyte-retaining matrix material for fuel cells, and is described in detail in commonly owned US-A-4 017 664 which is incorporated herein by reference. As discussed in that patent, a silicon carbide matrix preferably comprises at least 90% silicon carbide and up to 10% polytetrafluorethylene (PTFE) as a binder.

The ink was produced by blending 9250 ml deionized water with 750 g polyethylene oxide, 10000 g submicron silicon carbide (micropulverized), and 25 ml of ammonium hydroxide. The aforesaid mixture was blended in a Hobart mixer at slow speed until a smooth consistency was achieved, at which time 875 g FEP-120 dispersion was added. Mixing was then continued for two minutes. The resultant ink was then transferred to an inert plastic container.

After application, the substrate with the wet matrix coating was air-dried for about 24 hours at about 20°C to remove the liquid portion of the coating and then exposed to about 260°C for about 5 minutes to burn off the polyethylene oxide and surfactant and to sinter (i.e., partially melt) the PTFE binder. Alternatively, the drying step may also be accomplished by exposure to heated air or by radiant heating at about, for example 90°C.

The different thicknesses of silicon carbide matrix formed as previously described for the present invention were obtained by using the three different sizes of gravure roll cells heretofore defined as 10, 14 and 20 cells per cm. Data pertaining to these matrices by the process of the present invention are presented in the table below (TABLE II).

**TABLE II**

| AVERAGE MATRIX THICKNESS (MM) | FLUID VISCOSITY (CENTIPOISES) | SOLIDS IN FLUID (%) | QUAD GRAVURE PATTERN (CELLS/CM) | NUMBER OF SEQUENTIAL COATS |
|---|---|---|---|---|
| * | 34 | 51.2 | 20 | 1 |
| 0.013 | 34 | 51.2 | 14 | 1 |
| 0.015 | 34 | 51.2 | 10 | 1 |
| 0.023 | 34 | 51.2 | 10 | 2 |
| *Matrix layer not continuous; thickness not measured | | | | |

In all instances the matrix coating material contained about 51.2% solids by weight, in the form of about 95% silicon carbide and 5% PTFE. The viscosity of the matrix coating material was about 34 centipoises as measured by the Brookfield Viscometer Model RVT, Spindle No. 1 at 100 revolutions per minute. The matrices of 0.013 mm and 0.023 mm thicknesses set forth in the table were tested in subscale fuel cells and performed satisfactorily.

The gravure roll coating trials depicted by the data in TABLE II are representative of our testing of the process of the present invention. Such trials indicated that a gravure roll with 20 cells per cm in the quad design used may not satisfactorily form a continuous matrix. The operable range of cell frequency on the roller surfaces is seen to be from about 8 to 18 cells per cm. A cell frequency of 14 per cm produces a matrix thickness of 0.013 mm and satisfactory uniformity giving good fuel cell performance. Obviously gravure roll coating applications having less than 14 cells per cm in the quad design used, form matrices thicker than 0.013 mm that will give good fuel cell performance. The two-pass wet-on-wet application using the gravure roll with 10 cells per cm was designed to determine if a matrix so formed in two layers would give satisfactory fuel cell performance; such a technique may be practical to form very thin matrices of good uniformity and integrity by sequential coating in a single coating line.

In all examples of TABLE II the liquid vehicle was a combination of water (as the carrier or solvent) and polyethylene oxide (as the thickener): however, any carrier which can be evaporated and is compatible with the other materials in the fluid may be used. Examples of other possible carriers are glycol and glycerin. Other thickeners which may be used are alginates, natural gums, and polyacrylates. An example of a polyacrylate is CARBOPOL^{R} manufactured by the B.F. Goodrich Chemical Company, Cleveland, Ohio.

## Claims

1. A process for making a fuel cell electrode/matrix element, characterized by the steps of
intaglio gravure printing a uniform, continuous hydrophilic matrix layer having a thickness tolerance of less than 20 %, designed to trap a liquid under normal fuel cell operating conditions, onto the surface of a hydrophobic fuel cell gas diffusion electrode, said electrode including a catalyst layer onto which the matrix layer is printed, said step of printing including applying an ink comprised of between 15 and 60 %, by weight, of fuel cell electrolyte matrix material carried in a balance of liquid vehicle, the composite ink having a viscosity between 20 and 500 centipoises, placing said electrode with the catalyst layer to be coated facing upwardly, and printing or depositing said ink on the surface of said electrode in a layer not exceeding 0.05 mm, by an etched or engraved gravure roll having 8 to 18 cells per cm axially and circumferentially at the surface of said gravure roll; and
heat treating the matrix layer so formed to remove the liquid vehicle leaving a layer of matrix material on the electrode surface.

2. The process according to claim 1, characterized in that said gravure roll commprises an etched or engraved pattern of quad pyramidal cells.

3. The process according to any of claims 1 or 2, characterized in that said matrix material comprises, by weight, at least 90 % silicon carbide of an average size not exceeding one µm and up to 10 % binder.

4. The process according to claim 3, characterized in that said binder is polytetrafluoroethylene.

5. The process according to any of claims 1 to 4, characterized in that said liquid vehicle comprises water as a liquid carrier and polyethylene oxide as the thickener.

## Patentansprüche

1. Verfahren zum Herstellen eines Elektroden/Matrix-Elements für eine Brennstoffzelle,
**gekennzeichnet** durch die Schritte:
Aufdrucken im Tiefdruckverfahren einer gleichförmigen, kontinuierlichen hydrophilen Matrixschicht mit einer Toleranz in der Dicke von weniger als 20%, welche dafür vorgesehen ist, eine Flüssigkeit unter den normalen Betriebsbedingungen einer Brennstoffzelle einzuschließen, auf die Oberfläche einer hydrophobischen Brennstoffzellen-Gasdiffusionselektrode, wobei die Elektrode eine Katalysatorschicht enthält, auf welche die Matrixschicht gedruckt wird, wobei der Schritt des Aufdruckens umfaßt, eine Tinte aufzubringen, die zwischen 15 und 60 Gew.- % eines Brennstoffzellen-Elektrolytmatrixmaterials enthält, das in einem zu 100% ergänzten flüssigen Lösungsmittel enthalten ist, wobei die zusammengesetzte Tinte eine Viskosität zwischen 20 und 500 cP aufweist, die Elektrode mit der zu beschichtenden Katalysatorschicht nach oben gerichtet anzuordnen und die Tinte auf der Oberfläche der Elektrode in einer Schicht, die 0,05 mm nicht überschreitet, durch eine geätzte oder gravierte Gravürenwalze aufzudrucken oder abzuscheiden, welche 8 bis 18 Zellen pro cm axial und längs des Umfangs an der Oberfläche der Gravürenwalze aufweist, und
Wärmebehandeln der so gebildeten Matrixschicht, um das flüssige Lösungsmittel zu entfernen, so daß eine Schicht aus Matrixmaterial auf der Elektrodenoberfläche zurückbleibt.

2. Verfahren nach Anspruch 1,
dadurch **gekennzeichnet,** daß die Gravürenwalze ein geätztes oder graviertes Muster von viereckigen pyramidenförmigen Zellen umfaßt.

3. Verfahren nach einem der Ansprüche 1 oder 2,
dadurch **gekennzeichnet,** daß das Matrixmaterial mindestens 90 Gew.- % Siliciumcarbid mit einer mittleren Größe von nicht mehr als 1 µm und bis zu 10% Binder umfaßt.

4. Verfahren nach Anspruch 3,
dadurch **gekennzeichnet,** daß der Binder Polytetrafluorethylen ist.

5. Verfahren nach einem der Ansprüche 1 bis 4,
dadurch **gekennzeichnet,** daß das flüssige Lösungsmittel Wasser als flüssigen Träger und Polyethylenoxid als Verdickungsmittel umfaßt.

## Revendications

1. Procédé pour fabriquer un élément à électrode/matrice pour pile à combustible, caractérisé par les étapes qui consistent
à imprimer par héliogravure une couche hydrophile continue et uniforme de matrice ayant une tolérance d'épaisseur de moins de 20 %, conçue pour retenir un liquide dans des conditions normales de fonctionnement d'une pile à combustible, sur la surface d'une électrode hydrophobe à diffusion de gaz pour pile à combustible, ladite électrode comprenant une couche de catalyseur sur laquelle la couche de matrice est imprimée, ladite étape d'impression consistant à appliquer une encre constituée de 15 à 60 %, en poids, d'une matière pour matrice à électrolyte de pile à combustible dans un véhicule liquide constituant la partie restante, l'encre composite ayant une viscosité comprise entre 20 et 500 centipoises, à placer ladite électrode de manière que la couche de catalyseur à revêtir soit tournée vers le haut, et à imprimer ou déposer ladite encre sur la surface de ladite électrode en une couche ne dépassant pas 0,05 mm, au moyen d'un cylindre de gravure gravé ou tramé ayant 8 à 18 cellules par cm axialement et circonférentiellement à la surface dudit cylindre de gravure ; et
à traiter à chaud la couche de matrice ainsi formée pour éliminer le véhicule liquide, laissant une couche de matière pour matrice sur la surface de l'électrode.

2. Procédé selon la revendication 1, caractérisé en ce que ledit cylindre de gravure comporte un motif gravé ou tramé de cellules pyramidales quadruples.

3. Procédé selon l'une des revendications 1 et 2, caractérisé en ce que ladite matière pour matrice comprend, en poids, au moins 90 % de carbure de silicium d'une dimension moyenne ne dépassant pas 1 µm et jusqu'à 10 % d'un liant.

4. Procédé selon la revendication 3, caractérisé en ce que ledit liant est du polytétrafluoréthylène.

5. Procédé selon l'une quelconque des revendications 1 à 4, caractérisé en ce que ledit véhicule liquide comprend de l'eau en tant que support liquide et un oxyde de polyéthylène en tant qu'épaississant.
